# EUROPEAN PATENT APPLICATION

(11) **EP 4 779 556 A1**
(43) Date of publication of application: **22.07.2026**
(21) Application number: 25152143.1
(22) Date of filing: 16.01.2025
(51) Int. Cl.: G06T 3/4038, G06T 5/77

(54) **IMAGE STITCHING FOR GUIDING A MOTOR VEHICLE**

(71) Applicant: Connaught Electronics Ltd., County Galway H54 Y276 (IE)
(72) Inventor: RAMACHANDRAN, Vishnu, 600130 Chennai (IN); SUNIL, Sandeep, 600130 Chennai (IN); GHANDAM, Shanmukheswa Rao, 600130 Chennai (IN); SIVANANDAM, Devasena, 600130 Chennai (IN); ANTONY, Arun, Tuam, H54 Y276 (IE); SUBRAMANIAN, Muthukumar, 600130 Chennai (IN); NAGAPPAN, Venkatachalam, 600130 Chennai (IN)
(74) Representative: Jauregui Urbahn, Kristian

(57) **Abstract**

A first image (5a, 5b, 5c, 5d) representing a first part of an environment of a motor vehicle (1) and generated by a first camera (4a, 4b, 4c, 4d) of the motor vehicle (1) and a second image (5a, 5b, 5c, 5d) representing a second part of the environment of the motor vehicle (1) and generated by a second camera (4a, 4b, 4c, 4d) of the motor vehicle (1) are received. A stitched image (8) is generated depending on the first image (5a, 5b, 5c, 5d) and the second image (5a, 5b, 5c, 5d). An artifact (14) in the stitched image (8), which represents a component of the motor vehicle (1), is detected. An improved stitched image (12) is generated, wherein the artifact (14) is removed at least in part by applying a machine learning model, MLM, (11) trained for image inpainting to input data comprising the stitched image (8).

## Description

The present invention is directed to a computer-implemented method for image stitching for guiding a motor vehicle, wherein a first image representing a first part of an environment of the motor vehicle and generated by a first camera of the motor vehicle and a second image representing a second part of the environment of the motor vehicle and generated by a second camera of the motor vehicle are received, and a stitched image is generated depending on the first image and the second image. The invention is further directed to a corresponding method for guiding a motor vehicle at least in part automatically, to a data processing system for carrying out said computer-implemented method, to an electronic vehicle guidance system comprising said data processing system and to corresponding computer program products.

Advanced driver assistance systems and other systems for guiding a motor vehicle at least in part automatically have become increasingly prevalent in modern motor vehicles, providing a range of features.

Image stitching techniques may be used to provide the driver and/or downstream applications with a comprehensive representation of the outer environment of the motor vehicle.

However, existing image stitching methods encounter limitations that hinder their effectiveness and usability in real-world driving scenarios. One notable drawback is the occurrence of artifacts within stitched images depicting parts of the motor vehicle itself. These artifacts can significantly clutter the visual output, potentially causing distractions for drivers and compromising overall system performance. Furthermore, such artifacts may mislead or confuse the downstream applications, leading to inaccurate assessments of the surrounding environment.

The presence of these artifacts is particularly problematic when navigating complex environments with numerous obstacles or during challenging driving conditions like poor visibility due to weather or lighting variations. In such scenarios, accurate representation and interpretation of the surroundings are essential for ensuring safe navigation and timely driver assistance.

The publication R. Kumar et al.: "Surround-View Fisheye Camera Perception for Automated Driving: Overview, Survey & Challenges." IEEE Transactions on Intelligent Transportation Systems, pp. 1-22 presents approaches to surround-view environmental perception for automated driving using for example image stitching of several fisheye-camera images.

In the publication by O. Ronneberger et al.: "U-Net: Convolutional Networks for Biomedical Image Segmentation" (arXiv:1505.04597), the U-Net architecture is described, a widely used CNN architecture for image segmentation, which may, however, also be used for other computer vision tasks, in particular image-to-image tasks.

The publication J. Yu et al.: "Generative Image Inpainting with Contextual Attention," Proc. Computer Vision and Pattern Recognition (CVPR), 2018 describes an image inpainting algorithm based on an artificial neural network, ANN, with a contextual attention layer. The algorithms is also denoted as DeepFill v1. The publication J. Yu et al.: "Free-Form Image Inpainting with Gated Convolution," Proc. International Conference on Computer Vision (ICCV), 2019 of the same authors describes an image inpainting algorithm based on DeepFill v1, which uses gated convolutions instead of regular convolutions. The algorithms is also denoted as DeepFill v2.

It is an objective of the present invention to overcome these limitations at least in part by proposing an image stitching approach that reduces artifacts depicting vehicle components within stitched images.

The invention is based on the idea to generate an improved stitched image, wherein an artifact representing at least a part of a component of the motor vehicle is removed at least in part by applying a machine learning model, MLM, trained for image inpainting to input data comprising the stitched image. Therein, a two-step approach is employed, wherein first the artifact is detected and then the MLM is applied.

According to an aspect of the invention, a computer-implemented method for image stitching for guiding a motor vehicle is provided. Therein, a first image representing a first part of an environment of the motor vehicle, which is, in particular, an outer environment of the motor vehicle, and generated by a first camera of the motor vehicle and a second image representing a second part of the environment of the motor vehicle which is, in particular, different from the first part of the environment, and generated by a second camera of the motor vehicle are received. A stitched image is generated depending on the first image and the second image. An artifact in the stitched image, which represents at least a part of a component of the motor vehicle, is detected. An improved stitched image is generated, wherein the artifact is removed at least in part by applying an MLM trained for image inpainting to input data comprising the stitched image.

Unless stated otherwise, all steps of the computer-implemented method may be performed by a data processing system, which comprises at least one data processing device, in particular a data processing system of the vehicle. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to carry out the computer-implemented method. The terms "data processing system" and "at least one data processing device" may be used interchangeably.

All data processing devices of the at least one data processing device may be comprised by the vehicle. However, it is also possible that all data processing devices of the at least one data processing device are part of an external computing system external to the vehicle, for example a mobile electronic device, a backend server or a cloud computing system. It is also possible that the at least one data processing device comprises at least one vehicle data processing device of the vehicle as well as at least one external data processing device comprised by the external computing system. The at least one vehicle data processing device may for example be comprised by one or more electronic control units, ECUs, and/or one or more zone control units, ZCUs, and/or one or more domain control units, DCUs, of the vehicle and/or by the camera.

In case the at least one data processing device comprises two or more data processing devices, certain steps carried out by the at least one data processing device may be understood such that different data processing devices carry out different steps or different parts of a step. In particular, it is not required that each data processing device carries out the steps completely. In other words, carrying out the steps may be distributed amongst the two or more data processing devices.

In general, carrying out the computer-implemented method does not include generating the first image or the second image. Rather, the first image or the second image may be received by the data processing system directly from the first camera and the second camera, respectively, for example as respective parts of respective video streams generated by the first camera and the second camera, respectively, or indirectly, for example from a buffer or another storage device. However, from each implementation of the computer-implemented method, a respective implementation of a method for stitching for guiding a motor vehicle, which is not purely computer-implemented, is obtained by including respective steps of generating the first image by the first camera and/or generating the second image by the second camera.

A trained MLM can be understood as an algorithm, in particular a computer-implemented algorithm, which can reproduce functions that are possible through human intellectual performance concretely or in a broader sense. A trained MLM can also be referred to as a "trained function", for example.

When training an MLM, parameters of the MLM are generally adjusted or updated. The training may be supervised, semi-supervised or unsupervised. The training may also include reinforcement learning or representation learning and/or other known training methods. In particular, the parameters of the MLM can be adapted iteratively over several training steps. In particular, a predefined loss function can be minimized for training. If the MLM is an artificial neural network, ANN, a backpropagation algorithm may be used to adjust the parameters, for example.

In particular, an MLM may include an ANN, a support vector machine, a k-means clustering algorithm, a decision tree, and so on. In particular, an ANN may be or include a deep neural network and/or a convolutional neural network, CNN, in particular a deep CNN, and/or a recurrent neural network, RNN, in particular a recurrent CNN, and/or a transformer network and/or a generative adversarial network, GAN.

In general, carrying out the computer-implemented method does not include training the MLM for image inpainting. The MLM is for example provided to the data processing system for example in terms of a software program stored on a storage device. Alternatively, the MLM may be provided in terms of an electronic circuit, which implements the MLM in hardware. It is also possible that the MLM is partly implemented in software and partly implemented in hardware. In some embodiments, however, the computer-implemented method comprises training the MLM or partly training the MLM.

For generating the stitched image, a known image stitching algorithm may be used, as described for example in the above-mentioned publication of R. Kumar et al.

For example, the stitched image may be generated based on the first image, the second image, first calibration data of the first camera and second calibration data of the second camera. The calibration data may comprise respective extrinsic calibration data, in particular a pose of the respective camera in a predefined reference coordinate system, and intrinsic calibration data of the respective camera.

The first part of the environment and the second part of the environment differ from each other but may, in particular, overlap. In other words, a field of view of the first camera and a field of view of the second camera differ from each other but may, in particular, overlap. Consequently, the first image and the second image differ from each other but in a corresponding overlap region they may, in particular, represent the same content.

In general, a plurality of images representing respective parts the environment of the motor vehicle and generated by a plurality of cameras of the motor vehicle may be received, wherein the plurality of images comprises the first image and the second image and, optionally, one or more further images. The stitched image is then generated depending on the plurality of images.

In particular, the motor vehicle comprises a plurality of cameras including the first camera and the second camera. Each camera of the plurality of cameras generates exactly the plurality of images. All cameras of the plurality of cameras have different fields of views but, in particular, the respective field of view of each camera may overlap with the respective fields of view of further cameras of the plurality of cameras, in particular in case the plurality of cameras comprises three or more cameras. The plurality of cameras may for example comprise a front camera, a rear camera, a left side camera and a right side camera of the motor vehicle.

Generating the stitched image may, in particular, comprise one or more perspective transformations of the plurality of images, for example in order to generate the stitched image in a bird's-eye-view, BEV, or another surround view perspective.

The stitched image may also comprise additional data, for example an avatar of the motor vehicle or the like.

The component of the motor vehicle or a part of the component is depicted by the first image and/or by the second image and consequently, also by the stitched image.

The component of the motor vehicle may for example correspond to a bumper of the motor vehicle or to a wheel of the motor vehicle or to a side mirror of the motor vehicle or to a body of the motor vehicle.

To address this issue, the computer-implemented method employs an artifact detection mechanism that identifies, for example, a position or region within the stitched image representing the component of the motor vehicle at least in part. By leveraging the MLM for image inpainting, these detected artifacts are then effectively removed at least in part from the stitched image. The resulting improved stitched image provides a clearer and more accurate representation of the surrounding environment, free from distractions caused by unwanted visual elements.

An advantage of the computer-implemented method according to the invention is that it may be ensured that the driver receives uncluttered and non-distracting guidance information. Furthermore, the overall system performance, for example the reliability and accuracy of downstream functions for guiding the motor vehicle at least in part automatically, is improved by reducing potential confusion or misinterpretation arising due to the artifact. By employing the two-step approach, wherein first the artifact is detected and then the MLM is applied, the high performance of available MLMs for image inpainting may be exploited.

The improved stitched image resulting may for example be used in various automotive scenarios requiring enhanced visual guidance. For instance, it may seamlessly be integrated into existing ADAS frameworks to provide drivers with real-time navigation support or assist autonomous or semi-autonomous vehicles in accurately interpreting their surroundings for decision-making purposes during automated driving modes. Moreover, the improved stitched image could also find utility beyond automotive applications where multi-view image capture technologies are utilized.

According to several embodiments, detecting the artifact comprises determining image coordinates of a position of the artifact in the stitched image and the input data comprises the image coordinates of the position of the artifact. In some embodiments, the input data consists of the coordinates of a position of the artifact and the stitched image.

The coordinates of the position of the artifact in the stitched image may for example correspond to the coordinates of a center point or another characteristic point of an image region in the stitched image corresponding to the artifact.

In other words, the MLM is for example applied to the stitched image and the coordinates of the position of the artifact in the stitched image are provided to the MLM as an additional guidance information, which improves the accuracy and reliability of the MLM when generating the improved stitched image. By incorporating this additional guidance information, the MLM is provided with enhanced context regarding the specific regions requiring attention within the image, thereby improving its overall accuracy and efficiency in removing the artifact effectively.

In particular, by precisely identifying the coordinates of the position of the artifact, particularly relevant regions are targeted for improvement, thereby minimizing potential interference with other important visual cues present within the stitched image. Furthermore, providing these said coordinates as input data during the training process of the MLM may lead to an improved performance and reduced processing times.

Furthermore, various driving scenarios or environmental conditions that may impact the visibility or prominence of artifacts in the stitched image may be handles with increased reliability. For instance, under different lighting conditions or weather patterns, certain vehicle components might become more pronounced in captured images due to reflections or shadow effects respectively. By determining the coordinates of the position of the artifact, these changing artifact characteristics can be accurately targeted even as driving conditions vary dynamically over time and location.

According to several embodiments, detecting the artifact comprises generating an artifact mask, which specifies a region in the stitched image corresponding to the artifact and the input data comprises the artifact mask. In some embodiments, the input data consists of the artifact mask and the stitched image.

For example, the artifact mask may be a representation, in particular a binary representation, that delineates, outlines or highlights the region in the stitched image corresponding to the detected artifact.

By encoding critical spatial information about the detected artifact using such a format, valuable context that aids subsequent processing steps aimed at eliminating unwanted visual elements from the stitched image while simultaneously preserving essential details relevant for effective driver assistance functionality by the MLM.

For example, the artifact mask may have the same size as the stitched image in terms of pixels or rows and columns, respectively. The artifact mask comprises a respective pixel value, which indicates whether the pixel corresponds to an artifact or not for each pixel. The artifact mask may be a binary mask such that for a given pixel of the artifact mask, the respective pixel value is equal to a first value, for example 1, in case the corresponding pixel in the stitched image belongs to the artifact, and equal to a second value, for example 0, otherwise or vice versa.

The artifact mask may also be more complex, however, in some embodiments. For example, the artifact mask may be a semantic segmentation mask. The pixel values can then assume a plurality of different values, each indicating a class, for example an object type or the like, associated to the respective pixel of the stitched image. One or more of the classes may correspond to an artifact.

It is also possible that the pixel resolution of the artifact mask differs from the pixel resolution of the stitched image. For example two or more pixels of the stitched image may be represented by one pixel in the artifact mask.

By precisely identifying the regions corresponding to the artifact through the artifact mask, a targeted attention towards particularly relevant areas in the stitched image during the subsequent stage involving the application of the MLM is realized. Furthermore, leveraging this approach also enables more efficient utilization of computational resources by minimizing unnecessary computations performed across irrelevant pixels falling outside the designated artifact region thereby.

According to several embodiments, the artifact in the stitched image is detected by applying a further MLM trained for artifact detection to further input data comprising or consisting of the stitched image.

In general, carrying out the computer-implemented method does not include training the further MLM for artifact detection. The further MLM is for example provided to the data processing system for example in terms of a software program stored on a storage device. Alternatively, the further MLM may be provided in terms of an electronic circuit, which implements the further MLM in hardware. It is also possible that the further MLM is partly implemented in software and partly implemented in hardware. In some embodiments, however, the computer-implemented method comprises training the further MLM or partly training the further MLM.

In such embodiments, a reliable and fast detection of the artifact in the stitched image is achieved.

In particular, different architectures may be used for the further MLM including known architectures for object detection or semantic segmentation or pixel level classification. In case an object detection MLM is used, an output of the further MLM may for example comprise a bounding box or the like for the artifact in the stitched image. In particular, the position of the artifact in the stitched image, whose coordinates are part of the input data to the MLM for image inpainting in some embodiments, may be given by a respective position of the bounding box, for example a center position or a corner position of the bounding box.

In case an MLM for semantic segmentation or another type of pixel level classification is used, for example the U-net, the artifact mask, which is part of the input data to the MLM for image inpainting in some embodiments, may be an output of the further MLM. It is also possible, in respective embodiments, that the position of the artifact, whose coordinates are part of the input data to the MLM for image inpainting in some embodiments, is determined based on the output of the further MLM.

According to several embodiments, the further MLM comprises a U-net. In particular an output of applying the further MLM to the further input data comprises the artifact mask.

According to several embodiments, the MLM for image inpainting comprises a feed-forward generative network comprising a contextual attenuation layer. In some embodiments, the feed-forward generative network comprises at least one gated convolution layer.

For example, the MLM may be implemented as described in the two above-mentioned publications of J. Yu et al., in particular DeepFill v1 or preferably DeepFill v2.

Such MLMs, especially DeepFill v2 with its gated convolutions and contextual attention, are found to be very well suited for the present scenario because they are able to inpaint the areas where the artifact is removed seamlessly filling in the missing parts of the road or surroundings et cetera, ensuring that the improved stitched image remains visually coherent and free from distracting artifacts.

According to several embodiments, the stitched image is generated in the bird's-eye-view.

Consequently, the stitched image and the improved stitched image allow for a particularly comprehensive representation of the relevant outer environment of the motor vehicle.

According to several embodiments, the first camera is a non-gnomonic camera and/or the second camera is a non-gnomonic camera and/or the plurality of cameras is a plurality of non-gnomonic cameras.

A non-gnomonic or non-rectilinear camera can be understood as a camera with a non-gnomonic or non-rectilinear lens unit. A non-gnomonic or non-rectilinear lens unit can be understood as a lens unit, that is one or more lenses, having a non-gnomonic, that is non-rectilinear, mapping function, also denoted as curvilinear mapping function. In particular, fisheye cameras represent non-gnomonic or non-rectilinear cameras.

The mapping function of the lens unit can be understood as a function r(θ) mapping an angle θ from the center axis of radial distortion of the lens unit to a radial shift r out of the image center. The function depends parametrically on the focal length f of the lens unit. For example, a gnomonic or rectilinear lens unit has a gnomonic mapping function, in particular r(θ) = f tan(θ). In other words, a rectilinear lens unit maps straight lines in the real world to straight lines in the image, at least up to lens imperfections.

A non-rectilinear or curvilinear lens unit does, in general, not map straight lines to straight lines in the image. In particular, the mapping function of a non-rectilinear camera can be stereographic, equidistant, equisolid angle or orthographic. Mapping functions of non-rectilinear lens units may also be given, at least approximately, by polynomial functions.

Using non-gnonomic cameras, in particular fisheye cameras, a very large field of view of the individual cameras is achievable. In consequence, less cameras are required to cover the whole region of interest in the environment. On the other hand, also to risk for artifacts corresponding to components of the vehicle itself is increased. Thus, the invention is particularly beneficial in this case.

According to a further aspect of the invention, a method for guiding a motor vehicle at least in part automatically is provided. Therein, a computer-implemented method according to the invention is carried out and the motor vehicle is guided at least in part automatically depending on the improved stitched image.

Guiding the vehicle at least in part automatically may comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

According to several embodiments, for guiding the motor vehicle at least in part automatically, at least one control signal for guiding the motor vehicle at least in part automatically is generated depending on the improved stitched image and/or driver assistance information for assisting a driver of the motor vehicle at guiding the motor vehicle is generated depending on the improved stitched image.

The at least one control signal may for example be provided to one or more actuators of the motor vehicle, including for example one or more braking actuators and/or one or more steering actuators and/or one or more propulsion motors of the motor vehicle. The one or more actuators may affect a longitudinal and/or lateral control of the motor vehicle in order to guide the motor vehicle at least in part automatically based on the at least one control signal.

The driver assistance information may be output by means of an output device of the motor vehicle, for example a display and/or an audio output system and/or a haptic output system. Outputting the driver assistance information may for example comprise displaying the improved stitched image or an image depending on the improved stitched image on the display.

According to a further aspect of the invention, a data processing system is provided, which is configured to carry out a computer-implemented method according to the invention.

The terms "data processing system" and "at least one data processing device" may be used interchangeably in the present disclosure. In the present disclosure, a data processing device, also denoted as computing device, may for example be understood as a device with processing circuitry for processing data. A data processing device can therefore perform computing operations in order to process data. An indexed access to a data structure, for example a look-up table, LUT, or a database may also be considered as a computing operation. Data processing that is partially or fully implemented in hardware can also be considered a computing operation.

In particular, a data processing device may include one or more computers, one or more microcontrollers, and/or one or more integrated circuits, for example, one or more application-specific integrated circuits, ASIC, one or more field-programmable gate arrays, FPGA, and/or one or more systems-on-a-chip, SoC. A data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said devices.

A data processing device may also comprise one or more hardware and/or software interfaces, for example for receiving and/or providing data, respectively.

A data processing device may also comprise one or more memory devices. Therein, a memory device may be implemented as a volatile memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to a further aspect of the invention, an electronic vehicle guidance system for a motor vehicle is provided. The electronic vehicle guidance system comprises a data processing system according to the invention.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated April 2021.

According to several embodiments, the data processing system or a further data processing system of the electronic vehicle guidance system is configured to generate at least one control signal for guiding the motor vehicle at least in part automatically depending on the improved stitched image and/or to generate driver assistance information for assisting a driver of the motor vehicle at guiding the motor vehicle is generated depending on the improved stitched image.

According to several embodiments, the electronic vehicle guidance system comprises the first camera and/or the second camera or the electronic vehicle guidance system comprises the plurality of cameras.

According to a further aspect of the invention, a first computer program comprising first instructions is provided. When the first instructions are executed by a data processing system, the first instructions cause the data processing system to carry out a computer-implemented method according to the invention.

The first instructions may be provided as program code, for example. The program code can for example be provided as binary code or assembler and/or as source code of a programming language, for example C, and/or as program script, for example Python.

According to a further aspect of the invention, a second computer program comprising second instructions is provided. When the second instructions are executed by an electronic vehicle guidance system according to the invention, in particular by the data processing system of the electronic vehicle guidance system, the second instructions cause the electronic vehicle guidance system to carry out a method for guiding a vehicle at least in part automatically according to the invention.

The second instructions may be provided as program code, for example. The program code can for example be provided as binary code or assembler and/or as source code of a programming language, for example C, and/or as program script, for example Python.

According to a further aspect of the invention, a computer-readable storage medium storing a first computer program and/or a second computer program according to the invention is provided.

The first computer program, the second computer program and the computer-readable storage medium are respective computer program products comprising the first instructions and/or the second instructions.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- Fig. 1: shows schematically a motor vehicle with an exemplary embodiment of an electronic vehicle guidance system according to the invention;
- Fig. 2: shows a schematic flow diagram of an exemplary embodiment of a computer-implemented method for image stitching according to the invention;
- Fig. 3: shows schematically the application of a further MLM in a further exemplary embodiment of a computer-implemented method for image stitching according to the invention; and
- Fig. 4: shows schematically the application of an MLM in a further exemplary embodiment of a computer-implemented method for image stitching according to the invention.

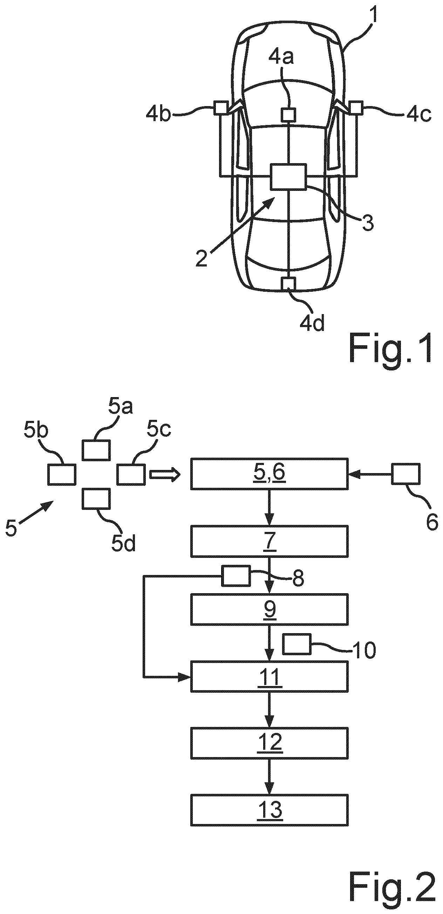

Fig. 1 shows schematically a motor vehicle 1 with an exemplary embodiment of an electronic vehicle guidance system 2 according to the invention.

The motor vehicle 1, for example the electronic vehicle guidance system 2, comprises at least a first camera 4a and a second camera 4b. In some embodiments, the motor vehicle 1, for example the electronic vehicle guidance system 2, further comprises a third camera 4c and a fourth camera 4d and, optionally, one or more further cameras (not shown). The cameras 4a, 4b, 4c, 4d are for example part of a surround view camera system, wherein their combined field of view covers a region of 360° around the motor vehicle 1 in the BEV perspective shown in Fig. 1.

Each of the cameras 4a, 4b, 4c, 4d may generate a corresponding image of the environment of the motor vehicle 1 representing a corresponding part of the environment. In particular, the first camera 4a generates a first image 5a and the second camera generates a second image 5b. If applicable, the third camera 4c generates a third image 5c and the fourth camera 4d generates a fourth image 5d. In other words, the cameras 4a, 4b, 4c, 4d generate two or more images, which will be denoted as a plurality of images 5 in the following.

The electronic vehicle guidance system 2 comprises a data processing system 3 according to the invention, which is configured to carry out a computer-implemented method for image stitching according to the invention. Therein, the data processing system 3 comprises an improved stitched image 12 based on the plurality of images 5. The data processing system 3 may then for example generate, depending on the improved stitched image, at least one control signal for guiding the motor vehicle 1 at least in part automatically and/or driver assistance information for assisting a driver of the motor vehicle 1 at guiding the motor vehicle 1.

Fig. 2 shows a schematic flow diagram of an exemplary embodiment of a computer-implemented method for image stitching according to the invention.

Therein, a stitched image 8 is generated depending on the plurality of images 5 and, for example, based on calibration data 6 of the cameras 4a, 4b, 4c, 4d, for example by an image stitching module 7. An artifact 14 in the stitched image 8, which represents at least a part of a component of the motor vehicle 1, is detected, in particular by applying an artifact detection algorithm 9 to the stitched image 8. The improved stitched image 12 is generated, wherein the artifact 14 is removed at least in part by applying an MLM 11 trained for image inpainting to input data comprising the stitched image 8 and a result of the artifact detection algorithm 9, for example an artifact mask 10, which specifies a region 15 in the stitched image 8 corresponding to the artifact 14.

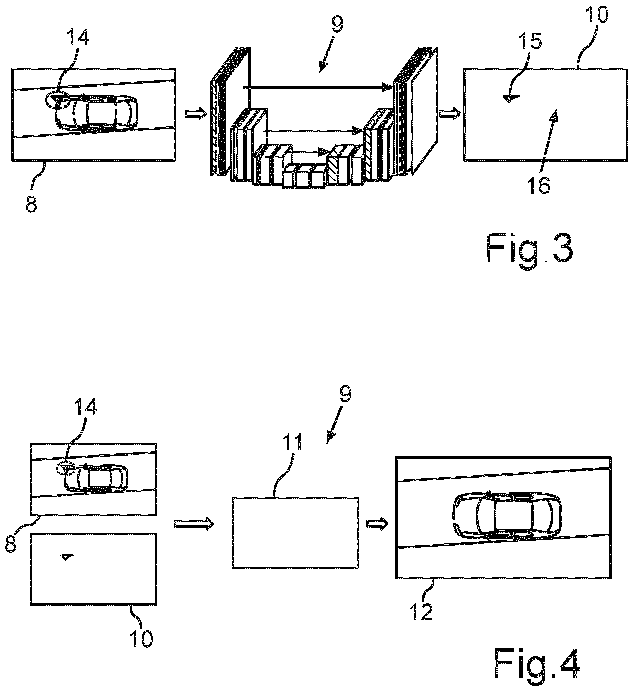

The application of the artifact detection algorithm 9 to the stitched image 8 is visualized schematically in Fig. 3. The artifact mask 10 may, for example, be a binary mask, whose value is equal to 1 in the region 15 corresponding to the artifact 14 and equal to 0 in the remaining region 16. The artifact detection algorithm 9 may for example be a further MLM trained for artifact detection, for example a U-net.

During the training process of the further MLM, a training dataset of stitched training images from a plurality of cameras may be gathered that includes various scenarios, such as different lighting conditions, weather conditions, and/or vehicle maneuvers. It may be ensured that the stitched training represent a diverse range of vehicle component artifacts, such as wheels, bumpers, side mirrors and so forth. For each stitched training image, a corresponding ground truth artifact mask may be generated manually, automatically or semi-automatically.

The training loop may be designed as follows: In a forward pass stage, for each batch of stitched training images, the further MLM processes the stitched training image to predict the artifact mask. The predicted artifact mask is compared with the ground truth artifact mask using a predefined loss function. The gradients of the loss with respect to the further MLM's model parameters are computed and used to update the model parameters, in particular minimizing the loss, in a backward pass stage. This process is repeated for multiple epochs, with each epoch consisting of a forward and backward pass over the entire training dataset.

The application of the MLM 11 to the stitched image 8 and the artifact mask 10 is visualized schematically in Fig. 4.

The MLM 11 and the further MLM may be trained separately, for example. To create a dataset for training the MLM 11, two training images of the motor vehicle 1 in BEV perspective may be captured, while the motor vehicle 1 is placed in the same location. For a first training image, the steerable wheels are turned maximally, such that at least one of the steerable wheels is visible in the BEV perspective. For a second training image, the steerable wheels are for example placed in their neutral orientation, such that they are not visible or less visible the BEV perspective. The second training image may then be used as the ground truth for the first training image, which is input to the MLM 11. This approach allows the MLM 11 to learn how to inpaint over the masked wheels by using the surroundings from the second image as a reference, ensuring accurate and realistic removal of artifacts.

As explained, the invention overcomes limitations of existing image stitching approaches at least in part.

In particular, the computer-implemented method according to the invention does not rely on the vehicle dynamics of the motor vehicle and it therefore particularly flexible. It provides more accurate results without depending on temporal data, for example compared to frame blending techniques. Furthermore, the computational demands to carry out the computer-implemented method are relatively low.

## Claims

1. Computer-implemented method for image stitching for guiding a motor vehicle (1), wherein
- a first image (5a, 5b, 5c, 5d) representing a first part of an environment of the motor vehicle (1) and generated by a first camera (4a, 4b, 4c, 4d) of the motor vehicle (1) and a second image (5a, 5b, 5c, 5d) representing a second part of the environment of the motor vehicle (1) and generated by a second camera (4a, 4b, 4c, 4d) of the motor vehicle (1) are received;
- a stitched image (8) is generated depending on the first image (5a, 5b, 5c, 5d) and the second image (5a, 5b, 5c, 5d);
- an artifact (14) in the stitched image (8), which represents at least a part of a component of the motor vehicle (1), is detected; and
- an improved stitched image (12) is generated, wherein the artifact (14) is removed at least in part by applying a machine learning model, MLM, (11) trained for image inpainting to input data comprising the stitched image (8).

2. Computer-implemented method according to claim 1, wherein detecting the artifact (14) comprises determining image coordinates of a position of the artifact (14) in the stitched image (8) and the input data comprises the image coordinates of the position of the artifact (14).

3. Computer-implemented method according to claim 1, wherein detecting the artifact (14) comprises generating an artifact mask (10), which specifies a region (15) in the stitched image (8) corresponding to the artifact (14) and the input data comprises the artifact mask (10).

4. Computer-implemented method according to one of the preceding claims, wherein the artifact (14) in the stitched image (8) is detected by applying a further MLM (9) trained for artifact detection to further input data comprising the stitched image (8).

5. Computer-implemented method according to claim 4, wherein the further MLM (9) comprises a U-Net.

6. Computer-implemented method according to one of the preceding claims, wherein the MLM (11) comprises a feed-forward generative network comprising a contextual attenuation layer.

7. Computer-implemented method according to claim 6, wherein the feed-forward generative network comprises at least one gated convolution layer.

8. Computer-implemented method according to one of the preceding claims, wherein the stitched image (8) is generated in a bird's-eye-view.

9. Computer-implemented method according to one of the preceding claims, wherein
- a plurality of images representing respective parts the environment of the motor vehicle (1) and generated by a plurality of cameras (4a, 4b, 4c, 4d) of the motor vehicle (1) are received, the plurality of images (5) comprising the first image (5a, 5b, 5c, 5d) and the second image (5a, 5b, 5c, 5d); and
- the stitched image (8) is generated depending on the plurality of images (5).

10. Computer-implemented method according to one of the preceding claims, wherein the component of the motor vehicle (1) corresponds to a bumper of the motor vehicle (1) or to a wheel of the motor vehicle (1) or to a side mirror of the motor vehicle (1) or to a body of the motor vehicle (1).

11. Computer-implemented method according to one of the preceding claims, wherein the first camera (4a, 4b, 4c, 4d) is a non-gnomonic camera and/or the second camera (4a, 4b, 4c, 4d) is a non-gnomonic camera.

12. Method for guiding a motor vehicle (1) at least in part automatically, wherein a computer-implemented method according to one of the preceding claims is carried out and the motor vehicle (1) is guided at least in part automatically depending on the improved stitched image (12).

13. Method according to claim 12, wherein
- at least one control signal for guiding the motor vehicle (1) at least in part automatically is generated depending on the improved stitched image (12); and/or
- driver assistance information for assisting a driver of the motor vehicle (1) at guiding the motor vehicle (1) is generated depending on the improved stitched image (12).

14. Data processing system (3), which is configured to carry out a computer-implemented method according to one of claims 1 to 11.

15. Electronic vehicle guidance system (2) comprising a data processing system (3) according to claim 14.

16. Electronic vehicle guidance system (2) according to claim 15, the electronic vehicle guidance system (2) comprising the first camera (4a, 4b, 4c, 4d) and/or the second camera (4a, 4b, 4c, 4d).

17. Computer program product comprising
- first instructions, which, when executed by a data processing system (3), cause the data processing system (3) to carry out a computer-implemented method according to one of claims 1 to 11; and/or
- second instructions, which, when executed by an electronic vehicle guidance system (2) according to one of claims 15 or 16, cause the electronic vehicle guidance system (2) to carry out a method according to one of claims 12 or 13.
